Europäisches Patentamt

European Patent Office

Office européen des brevets

(11) Veröffentlichungsnummer: **0 508 333 A1**

## (12) EUROPÄISCHE PATENTANMELDUNG

(21) Anmeldenummer: **92105855.8**

(22) Anmeldetag: **04.04.92**

(51) Int. Cl.5: **H04N 7/00**, H04N 9/79, H04N 9/83

(30) Priorität: **12.04.91 DE 4111979**

(43) Veröffentlichungstag der Anmeldung:
**14.10.92 Patentblatt 92/42**

(84) Benannte Vertragsstaaten:
**PT**

(71) Anmelder: **DEUTSCHE THOMSON-BRANDT GMBH**

**W-7730 Villingen-Schwenningen(DE)**

(72) Erfinder: **Plantholt, Martin**
**Am Mittelpfad 12**
**W-6277 Bad Camberg 2(DE)**

(54) **Vorrichtung zur Bildsignal-Aufzeichnung und/oder -Wiedergabe.**

(57) Für die kompatible Einführung eines 16:9-Breitbildformates in bestehende Fernsehstandards mit dem Format 4:3 ist das Letterbox-Verfahren vorgesehen. Bei diesem Verfahren wird auf 4:3-Empfängern die 16:9-Bildinformation mit schwarzen Streifen am oberen und unteren Bildrand dargestellt. Zu einer formatfüllenden Darstellung mit nicht reduzierter Auflösung auf einem 16:9-Empfänger können in den Zeilen in den schwarzen Streifen Zusatzinformationen in Form einer Restseitenbandmodulation des Farbträgers übertragen werden. In der Veröffentlichung "Adaptive Luminanz-Chrominanz-Trennung mit unterschiedlich farbträgerverkoppelten Sampling-Phasen", R. Schweer, M. Plantholt , Fernseh- & Kinotechnik 12/1990, ist ein integrierter Kammfilter-Schaltkreis zur Luminanz/Chrominanz-Separation beschrieben. Ein digitaler Kammfilter-Decoder mit diesem integrierten Schaltkreis kann bei entsprechenden Modifikationen für die Demodulation von Zusatzinformationen von FBAS-Letterbox-Signalen als Aufbereitung für eine Aufzeichnung aller Bestandteile solcher Letterbox-Signale mit Hilfe eines S-VHS- oder Hi8-Videorecorders verwendet werden.

Fig. 1

EP 0 508 333 A1

Die Erfindung betrifft eine Vorrichtung zur Bildsignal-Aufzeichnung und/oder -Wiedergabe.

## Stand der Technik

Für die kompatible Einführung eines 16:9-Breitbildformates in bestehende Fernsehstandards (z.B. PAL, SECAM, NTSC) mit dem Format 4:3 wird das sogenannte Letterbox-Verfahren diskutiert. Bei diesem Verfahren wird auf 4:3-Empfängern die 16:9-Bildinformation mit schwarzen Streifen am oberen und unteren Bildrand dargestellt. Zur Anpassung der Geometrieverhältnisse auf den 4:3-Empfängern bedarf es dazu einer vertikalen Transcodierung des 16:9-Quellsignales, die im sichtbaren Bildfenster auf dem 4:3-Empfänger nur 431 Zeilen darstellt. Die restlichen 144 aktiven Zeilen (575Z - 431Z = 144Z) erscheinen auf dem 4:3-Empfänger als schwarze Streifen zu je 72 Zeilen am oberen und unteren Bildrand. Die Beschreibung eines entsprechenden Verfahrens findet sich in "Verbesserungsmöglichkeiten und Entwicklungstendenzen bei PAL", G. Holoch, Vortrag FKTG, 17.01.1989, Berlin.

Zu einer formatfüllenden Darstellung mit nicht reduzierter Auflösung auf einem 16:9-Empfänger können in den 144 Zeilen, die im 4:3-Empfänger als schwarze Streifen erscheinen, Zusatzinformationen übertragen werden. Diese Zusatzinformationen können nach "Die neuen Wege des alten PAL", A. Ziemer, E. Matzel, Funkschau 18/1989, im sog. Ultraschwarz-Bereich übertragen werden. Es wird dabei der Bereich zwischen Schwarzpegel und z.B. der halben Synchronimpulshöhe ausgenutzt. Damit ist das eingelagerte Zusatzsignal auf dem 4:3-Empfänger nicht sichtbar. In PCT/EP91/00397 ist ein Übertragungsverfahren angegeben, das solche Zusatzinformationen in Form einer Restseitenbandmodulation des Farbträgers überträgt.

## Erfindung

Der Erfindung liegt die Aufgabe zugrunde, eine Vorrichtung zur Bildsignal-Aufzeichnung und/oder -Wiedergabe anzugeben, welches Bildsignale zusammen mit Zusatzinformationen aufzeichnen und/oder wiedergeben kann unter Verwendung von bekannten integrierten Schaltkreisen. Diese Aufgabe wird durch die in Anspruch 1 angegebene erfindungsgemäße Vorrichtung gelöst.

Im Prinzip ist die erfindungsgemäße Vorrichtung versehen mit einem vor einem Luminanzkomponenten-Eingang und Chrominanzkomponenten-Eingang angeordneten integrierten Schaltkreis, der an einem Eingang anliegende FBAS-Signale mittels eines signaladaptiven Filters und eines digitalen Chroma-Decoders für den Farbträger in Luminanz- und Chrominanz-Komponenten auftrennen kann, wobei dieser Schaltkreis verwendet wird, um auf den Farbträger aufmodulierte Zusatzinformationen von am Eingang anliegenden FBAS-Signalen im Letterboxformat mit dem Chroma-Decoder digital zu demodulieren und die demodulierten Zusatzinformationen während der Zeilen in den Streifen des Letterboxformats dem Luminanz-Komponenteneingang der Vorrichtung zuzuführen.

Vorteilhafte Weiterbildungen der erfindungsgemäßen Vorrichtung ergeben sich aus den Unteransprüchen 2 bis 8.

In der Veröffentlichung "Adaptive Luminanz-Chrominanz-Trennung mit unterschiedlich farbträgerverkoppelten Sampling-Phasen", R. Schweer, M. Plantholt , Fernseh- & Kinotechnik 12/1990, ist ein integrierter Kammfilter-Schaltkreis zur Luminanz/Chrominanz-Separation beschrieben. Ein digitaler Kammfilter-Decoder mit diesem integrierten Schaltkreis kann aber bei entsprechenden Modifikationen ebenfalls für die Demodulation von Zusatzinformationen von FBAS-Letterbox-Signalen als Aufbereitung für eine S-VHS- oder Hi8-Aufzeichnung verwendet werden. Dadurch ist eine Aufzeichnung und/oder Wiedergabe von allen Bestandteilen solcher Letterbox-Signale mit Hilfe eines S-VHS- oder Hi8-Recorders möglich.

Zusatzinformationen, die nach PCT/EP91/00397 zur kompatiblen Übertragung in einem Standardkanal (z.B. PAL-Kanal) einem Träger aufmoduliert wurden, belegen im allgemeinen die volle Kanalbandbreite (z.B. bei PAL 5 MHz). Dies gilt dann ebenfalls für die Aufzeichnung. Heutige Viderecorder, die z.B. mit S-VHS- oder Hi8-Technik arbeiten, können zwar prinzipiell eine solche Bandbreite aufzeichnen, erwarten dann aber das Luminanzsignal und das Chrominanzsignal auf getrennten Signalleitungen. Die Zusatzinformationen sind somit im Prinzip im breitbandigen Luminanzkanal derartiger Recorder aufzeichenbar. Allerdings würden sich Zeitbasisschwankungen, die mit der Aufzeichnung verbunden sind, nachteilig auf die Weiterverarbeitung und Auswertung der Zusatzinformationen in einem entsprechenden Empfänger auswirken. Dieses Problem läßt sich umgehen, wenn die Zusatzinformationen vor einer Aufzeichnung demoduliert und als Basisbandsignale aufgezeichnet werden.

Zur Demodulation der Zusatzinformationen und gleichzeitigen Aufspaltung des FBAS-Signales in einen Luminanz- und Chrominanzanteil (Y,C) läßt sich der obengenannte integrierte Kammfilter-Schaltkreis verwenden, wenn die in diesem integrierten Schaltkreis durchgeführte Abtastung der Luminanzsignale mit einer der Modulation der Zusatzinformation entsprechenden Phasenlage durchgeführt wird. Vorteilhaft wird dabei die Phasenlage des Abtast-Taktes von einer in dem integrierten Schaltkreis befindlichen Phasenregelschaltung (PLL: phase locked loop) bereitgestellt.

Vorteilhaft können in dem Schaltkreis bereits vorhandene Filtermittel mitgenutzt werden.

Das zur Demodulation der Zusatzinformationen benötigte Nyquistfilter nach PCT/EP91/00397, das seinen Nyquistpunkt bei der Farbträgerfrequenz aufweist, kann gegebenenfalls zusätzlich in einen solchen Schaltkreis integriert werden.

## Zeichnungen

Anhand der Zeichnungen werden Ausführungsbeispiele der Erfindung beschrieben. Die Zeichnungen zeigen in:

Fig. 1    S-VHS-Recorder mit vorgeschaltetem Farbträgerdemodulator und Umschaltern;

Fig. 2    bekannter digitaler Kammfilter-Schaltkreis;

Fig. 3    bekannte digitale Demodulation von farbträgermodulierten Farbsignalen;

Fig. 4    digitale Demodulation von farbträgermodulierten Zusatzinformationen;

Fig. 5    spektrale Darstellung der Demodulation von Zusatzinformationen und Abtastung des Hauptsignales.

## Ausführungsbeispiele

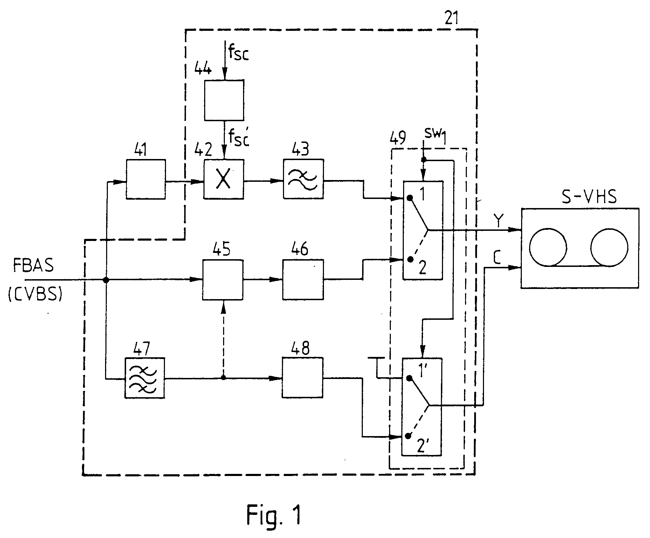

Fig. 1 zeigt eine einem S-VHS- oder Hi8-Recorder S-VHS vorgeschaltete Einrichtung zur Demodulation von farbträgermodulierten Zusatzinformationen sowie zur Trennung nach Luminanzsignal Y und Chrominanzsignal C. Aus dem ankommenden FBAS-Signal wird mittels eines Bandpaßfilters 47 der um den Farbträger liegende Frequenzbereich herausgefiltert und somit das Chrominanzsignal C gewonnen. Das Chrominanzsignal wird dann gegebenenfalls einer zweiten Laufzeitschaltung 48 zugeführt, die eine zeitliche Anpassung an die Luminanzsignalverarbeitung bzw. an die Verarbeitungszeit für die Zusatzinformationen vornimmt. Dieses Chrominanzsignal gelangt dann auf einen vierten Eingang 2' einer Videoumschaltvorrichtung 49, die zeilenabhängig eine Schalterstellung ändern kann. Während der Letterbox-Zeilen (Schalterstellung 1 bzw. 1') ist kein einen Chrominanz-Bildinhalt repräsentierendes Chrominanzsignal vorhanden. In diesem Fall kann der dritte Eingang 1' der Videoumschaltvorrichtung 49 vorteilhaft auf einen konstanten Wert, z.B. Masse oder mittleres grau (unbunt), gelegt werden. Das Luminanzsignal Y kann in einer Separierstufe 45 aus dem FBAS-Signal gewonnen werden, indem entweder das Chrominanzsignal C vom ankommenden FBAS-Signal subtrahiert oder daß FBAS-Signal einer Notchfilterung unterzogen wird. Das Luminanzsignal wird gegebenenfalls anschließend zeitlich in einer ersten Laufzeitschaltung 46 an die Verarbeitungszeit für die Zusatzinformationen angeglichen und einem zweiten Eingang 2 der Videoumschaltvorrichtung 49 zugeführt.

Die Videoumschaltvorrichtung wird von einem Steuersignal $sw_1$ gesteuert, das beispielsweise mit Hilfe einer nicht dargestellten Synchronimpuls-Auswertstufe gewonnen wird. Die beiden Schalter in der Videoumschaltvorrichtung befinden sich in Stellung 2 bzw. 2' während der Zeilen des Hauptsignals. Die farbträgermodulierten Zusatzinformationen aus den Zeilen der Letterbox-Streifen des FBAS-Signals werden zunächst einem Nyquistfilter 41 zugeführt, das gemäß PCT/EP91/00397 einen -6dB -Punkt bei der Farbträgerfrequenz aufweist und für eine korrekte Restseitenbandmodulation bzw. -demodulation erforderlich ist. Dieses Ausgangssignal wird dann in einem Demodulator 42 demoduliert, wobei diesem Demodulator ebenfalls die Farbträgerfrequenz $f_{sc}'$ mit einer geeigneten Phasenlage zugeführt wird. Die Farbträgerfrequenz $f_{sc}$ läßt sich in bekannter Weise aus dem übertragenen Burstsignal gewinnen. Die erforderliche Phasenlage von $f_{sc}'$, die der Modulationsphase der Zusatzinformationen entsprechen muß, wird über einen Phasenschieber 44 herbeigeführt. Die bei der Demodulation entstehenden unerwünschten Modulationsprodukte des oberen Seitenbandes werden in einem nachfolgenden Tiefpaßfilter 43 abgetrennt. Diese Tiefpaßfilter sollte das gewonnene Basisband der Zusatzinformationen auf Frequenzen bis zur Farbträgerfrequenz begrenzen. Das Ausgangssignal des Tiefpaßfilters wird einem ersten Eingang 1 der Videoumschaltvorrichtung 49 zugeführt.

Mit dieser Schaltungsanordnung, die aus einem Letterbox-FBAS-Signal ein separates Luminanzsignal Y und Chrominanzsignal C gewinnt, wird vorteilhaft erreicht, daß innerhalb von Bildern während des Aufzeichnungsvorganges im Recorder S-VHS keine Umschaltvorgänge notwendig werden. Somit werden mögliche Einschwingprobleme von Filtern etc. umgangen.

Wenn ein Standard-FBAS-Signal vorliegt, d.h. kein Letterbox-Signal oder ein Letterbox-Signal ohne Zusatzinformationen, bleiben die beiden Schalter in der Videoumschaltvorrichtung 49 vorteilhaft in Stellung 2 bzw. 2'.

Der Demodulator 42 kann neben der eigentlichen Demodulation vorteilhaft noch eine Verstärkung der Zusatzinformationen durchführen, um die Amplitudenreduktion der Zusatzinformationen durch die Restseitenbandübertragung und eine Einlagerung in den Ultra-Schwarz-Bereich zu kompensieren. Weiterhin ist eine Anhebung des Gleichspannungspegels (DC-Offset) aus dem Ultra-Schwarz-Bereich heraus, z.B. auf einen mittleren Grau-Pegel, für die Aufzeichnung vorteilhaft, da die Aufzeichnung dann in einem definierten, linearen Aussteuerbereich des Recorders erfolgt und somit Verzerrungen vermieden bzw. reduziert werden. Dieser DC-Offset kann dann gegebenenfalls vor der Einspeisung des aufgezeichneten Signals in eine mit Y/C-Eingängen versehene 16:9-Bildwiedergabevorrichtung wieder rückgängig gemacht werden.

Bei der Wiedergabe durchlaufen die Luminanz- und Chrominanz-Signale und Zusatzinformationen eine entsprechende Behandlung.

Die Erkennung eines Letterbox-FBAS-Signales kann durch einen mitübertragenen Identifikationsimpuls (z.B. während der vertikalen Austastlücke) erfolgen. Andererseits läßt sich auch in einem lokalen Signalart-Detektor die Tatsache auswerten, daß die Zusatzinformationen im Ultraschwarz-Bereich, d.h. mit Signalanteilen unterhalb des Schwarzpegels, übertragen werden.

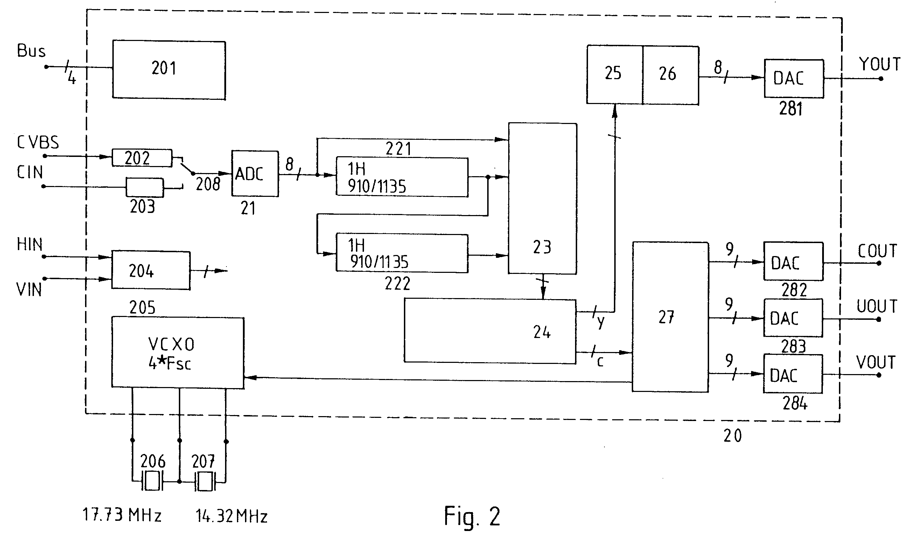

Der umrahmt dargestellte Schaltungsteil 21 läßt sich nun vorteilhaft durch den in Fig. 2 dargestellten digitalen Kammfilter-Schaltkreis 20 realisieren, wenn der Farbträger-Demodulator 42 digital ausgeführt wird.

Die Luminanz-Chrominanz-Trennung des Eingangssignales FBAS in die Ausgangssignale Y und C läßt sich direkt mit diesem Schaltkreis durchführen, da er einen FBAS-Eingang CVBS, einen Luminanzausgang YOUT und einen Chrominanzausgang COUT aufweist.

Das Letterbox-FBAS-Signal am Eingang FBAS wird über eine Klemmschaltung 202 und einem Klemmumschalter 208 einem A/D-Umformer 21 zugeführt. An den Klemmumschalter ist über eine RC-Stufe 203 und den Eingang CIN alternativ eine geträgerte Chrominanz-Komponente anschließbar. Das A/D-gewandelte FBAS-Signal wird direkt, über eine erste Zeilenverzögerung 221 und über eine zweite Zeilenverzögerung 222, deren Verzögerungszeiten dem jeweiligen Fernsehstandard angepaßt sind, einer ersten Filterstufe 23 zugeführt. In dieser Filterstufe werden die Y-Komponente und die C-Komponenten tiefpaßgefiltert. Die gefilterten Komponenten gelangen zu einer signaladaptiven Y/C-Kammfilterstufe 24.

Die Y-Komponente an deren Ausgang wird über eine Luminanz-Verzögerungsschaltung 25 und ein Peaking-Filter 26 einem ersten D/A-Umformer 281 zugeführt.

Die C-Komponente an deren Ausgang wird einem Chroma-Decoder 27 zugeführt. Dieser Chroma-Decoder führt die Demodulation des Farbträgers durch und enthält auch eine automatische Amplitudenregelung, eine Farbtoneinstellung für NTSC, eine PAL-Logik, einen Farbabschalter, eine Farbsignalart-Identifikationslogik und eine PLL-Steuerstufe, die die Phasenlage der in einem Taktgenerator 205 erzeugten vierfachen Farbträgerfrequenz 4*$f_{sc}$ regelt. Ein erster Quarz 206 wird zur Erzeugung der vierfachen PAL- und ein zweiter Quarz 207 zur Erzeugung der vierfachen NTSC-Farbträgerfrequenz verwendet. Der Chroma-Decoder 27 liefert über einen zweiten D/A-Umformer 282 ein Chrominanzsignal COUT zur Weiterverarbeitung in einem S-VHS- oder Hi8-Videorecorder, über einen dritten D/A-Umformer 283 die U-Komponente UOUT und über einen vierten D/A-Umformer 284 die V-Komponente VOUT im Basisband.

In Steuerlogik 204 werden aus an den Eingängen HIN und VIN anliegenden H-Sync- und V-Sync-Impulsen entsprechende Steuersignale für die Baugruppen auf dem integrierten Schaltkreis generiert. Über die Bus-Interface-Schaltung 201 werden verschiedene Funktionen des integrierten Schaltkreises gesteuert bzw. abgefragt.

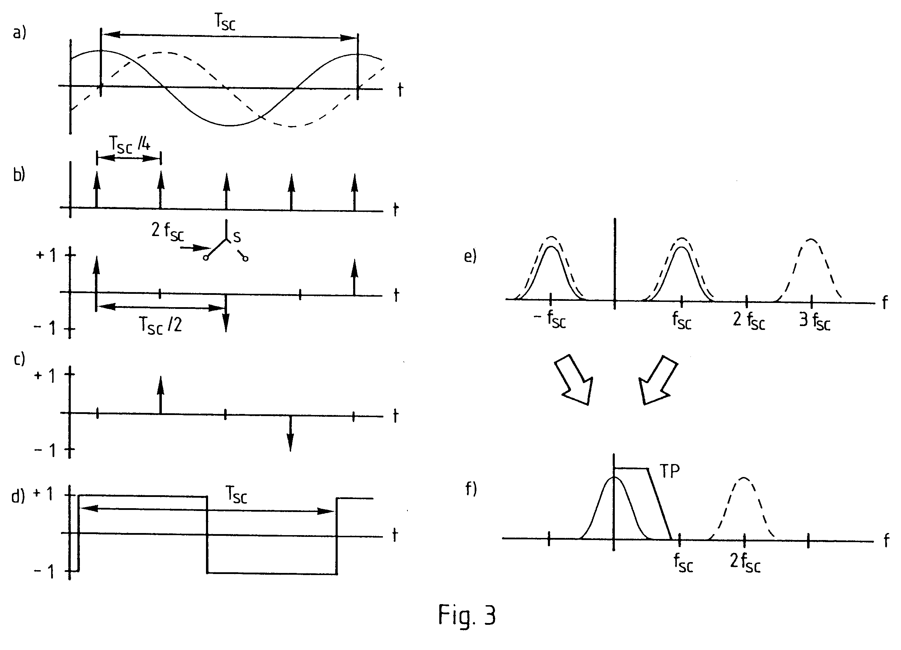

Die digitale Demodulation von quadraturmodulierten Farbsignalen, wie sie beispielsweise im PAL- und NTSC-System verwendet wird, ist in Fig. 3 dargestellt und wird zur erfindungsgemäßen Verwendung einer digitalen Demodulation von farbträgermodulierten Zusatzinformationen erweitert.

Für die digitale Verarbeitung von geträgerten Farbsignalen ist es vorteilhaft, die Abtastfrequenz des Analog-Digital-Umformers 21 an die entsprechende Farbträgerfrequenz $f_{sc}$ anzubinden. Besondere Vorteile im Hinblick auf eine einfache Realisierung von Verarbeitungsprozessen wie z.B. der Farbdemodulation ergeben sich, wenn die Abtastfrequenz gleich der vierfachen Farbträgerfrequenz 4*$f_{sc}$ gewählt und dabei eine spezielle Phasenbeziehung eingehalten wird.

Fig. 3a zeigt die Trägersignale, die aufgrund der Quadraturlage einen 90°-Phasenversatz aufweisen. Diese Trägersignale sind mit den entsprechenden Farbsignalkomponenten moduliert (nicht dargestellt in Fig. 3). Wird die Abtastphase der vierfachen Farbträgerfrequenz 4*$f_{sc}$ in Fig. 3b nun so gewählt, daß die Nulldurchgänge und Maxima bzw. Minima der Trägersignale abgetastet werden, so ergeben sich jeweils zwei Abtastwerte pro Trägerperiode $T_{sc}$, die diese speziellen Werte repräsentieren. Durch eine Selektion solcher Abtastwerte mittels eines Schalters S, der mit halber Abtastfrequenz (2*$f_{sc}$) getaktet wird, können die Trägersignale gemäß Fig. 3c separiert werden.

Dieser Vorgang läßt sich auch als Abtastung mit doppelter Farbträgerfrequenz interpretieren. Das Spektrum der geträgerten Farbkomponenten wird somit bei ungeradzahligen Vielfachen der Farbträgerfrequenz wiederholt, wie in Fig. 3e dargestellt. Die eigentliche Demodulation der trägerfrequenten Farbkomponenten, die die Umsetzung in die Basisbandlage bewirkt, wird durch eine geschaltete Gewichtung der Abtastwerte mit ±1 entsprechend Fig. 3d erreicht. Der Farbträger wird somit zu einem Gleichanteil und die aufmodulierten und abgetasteten Farbkomponenten können über die D/A-Umformer 282-284 zurückgewonnen werden.

Da die Gewichtung mit einer der Farbträgerperiode $T_{sc}$ entsprechenden Folge auftritt, kann dieser Prozeß als Modulation mit der Farbträgerfrequenz aufgefaßt werden. In der spektralen Darstellung nach Fig. 3f werden die Spektralkomponenten der Abtastung in Fig. 3e um die Farbträgerfrequenz versetzt. Durch entsprechende Tiefpaßfilterung erhält man die gewünschten Farbkomponenten in der Basisbandlage.

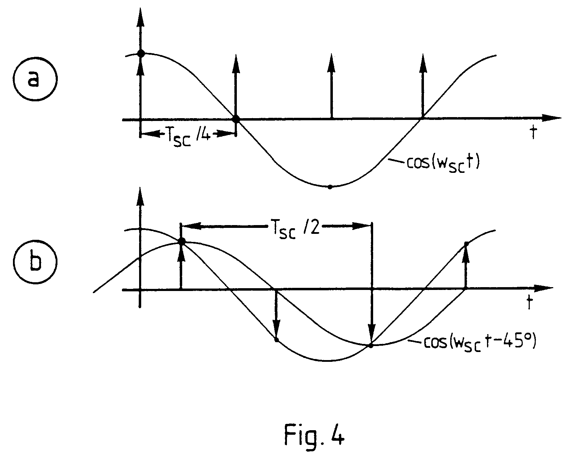

Fig. 4 zeigt die Abtastung eines Farbträgers, der als Modulationsträger für Zusatzinformationen dient. Fig. 4a stellt die Abtastung des Trägers cos-($\omega_{sc}$*t) mit vierfacher Farbträgerfrequenz 4*$f_{sc}$ dar, wobei in den Extremwerten und Nulldurchgängen abgetastet wird (0°-Phasenversatz). Fig. 4b zeigt die Abtastung der gleichen Trägerschwingung mit einer beispielsweise um 45° versetzten Phasenlage des Abtastrasters. Berücksichtigt man nun nur jeden zweiten Abtastwert, wie auch in Fig. 3b und 3c dargestellt, so erhält man Abtastwerte, die eine um 45° versetzte Trägerschwingung cos($\omega_{sc}$*t-45°) repräsentieren. Diese Schwingung demoduliert dann in der nach Fig. 3d und 3f dargestellten Weise die Zusatzinformationen phasenrichtig, wenn diese senderseitig ebenfalls mit einer Trägerschwingung cos($\omega_{sc}$*t-45°) aufmoduliert worden sind.

Die phasenrichtige Demodulation von Zusatzinformationen mit beliebiger Modulationsphase läßt sich durch eine entsprechende Phasenschiebung des empfängerseitigen Abtastrasters gemäß Fig. 4b erreichen. Die Phasenlage der senderseitigen Modulation von Zusatzinformationen ist im allgemeinen bekannt, so daß empfängerseitig die entsprechende Auswertung des Farbbursts ausreicht, um die erforderliche Phasenlage des Abtastrasters über einen Phasenschieber herbeizuführen.

Nach Fig. 4b ist es für die Demodulation von Zusatzinformationen ausreichend, eine Abtastfrequenz mit zweifacher Farbträgerfrequenz 2*$f_{sc}$ = 1/[$T_{sc}$/2] und entsprechender Phasenlage bereitzustellen.

Nach Fig. 3c und Fig. 3e ist die effektive Abtastfrequenz für die Chrominanz ebenfalls nur 2*$f_{sc}$. In der Anwendung des Kammfilter-Schaltkreises aus Fig. 2 zur Luminanz-Chrominanz-Trennung und Demodulation von Zusatzinformationen reicht dann eine Abtastung in A/D-Umformer 21 mit zweifacher Farbträgerfrequenz aus. Die Chrominanzsignale werden in der ersten Filterstufe 23 bandpaßgefiltert und ergeben sich dann entsprechend der Darstellung nach Fig. 3e, wobei jetzt die gezeigten Spektren noch beide Quadraturkomponenten enthalten, wie es für die Chrominanzaufzeichnung im S-VHS-Betrieb erforderlich ist.

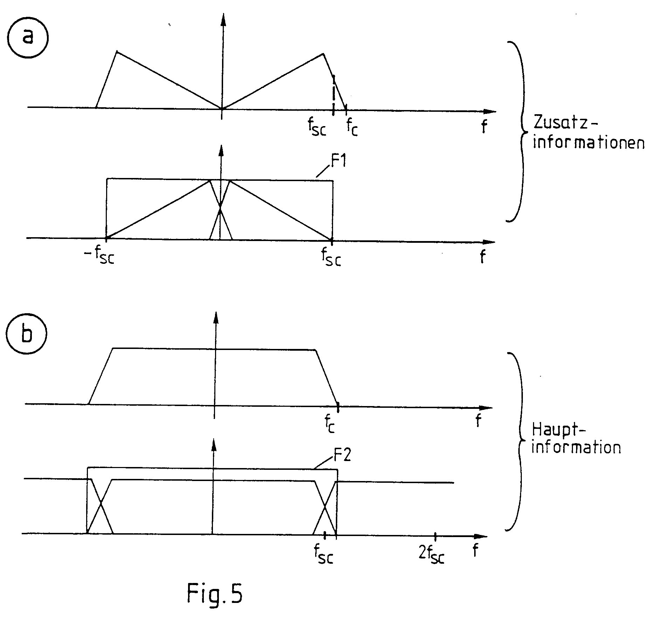

Fig. 5 zeigt eine spektrale Darstellung der Demodulation bzw. Abtastung von Zusatzinformationen und Hauptsignalen. In Fig. 5a ist die Demodulation einer willkürlich spektral geformten Zusatzinformation dargestellt. Für die Übertragung wird die Zusatzinformation mit dem Farbträger moduliert und weist nach empfängerseitiger Nyquistfilterung eine Nyquistflanke bezüglich des Farbträgers auf. Durch die Demodulation ergänzen sich diese Flankenbereiche in der Umgebung der Frequenz 0 und auf einer Breite, die der Flankenbreite entspricht, zu einem konstanten Verlauf im Spektrum. Die nach der Demodulation erforderliche Filterung F1 im Chroma-Decoder 27 beschränkt das Spektrum bis zur Farbträgerfrequenz $f_{sc}$. Wird eine Abtastung mit zweifacher Farbträgerfrequenz auf das Hauptsignalspektrum angewandt, das beispielsweise bis zur Kanalgrenze $f_c$ (5 MHz) reicht, ergibt sich die in Fig. 5b gezeigte Darstellung. Hierbei ist angenommen, daß das im Eingang der Schaltung nach Fig. 1 befindliche Nyquistfilter 41 auch während der Hauptsignalzeilen aktiv ist und nicht durch einen Schalter kurzgeschlossen wird. Die nach der Abtastung erforderliche Tiefpaßfilterung mit der Grenzfrequenz $f_c$ ist durch das Filter F2 kenntlich gemacht.

Prinzipiell kann jetzt durch periodisches Umschalten von Filterkoeffizienten-Sätzen eine Nachfilterung gemäß Filter F1 während der Letterbox-Zeilen und eine Nachfilterung gemäß Filter F2 während der Hauptsignal-Zeilen bewirkt werden. Allerdings ist der Überlappungsbereich bzw. der Auflösungsverlust so gering, daß vorteilhaft nur ein Filtertyp verwendet werden muß, dessen Grenzfrequenz $f_{grenz}$ zwischen $f_{sc}$ und $f_c$ liegt.

Ebenso ist es möglich, das Nyquistfilter 41 auf dem Schaltkreis aus Fig. 2 zu integrieren und für eine digitale Realisierung nach der Abtastung im A/D-Umformer 21 zu plazieren. Zur Realisierung des Nyquistflankenbereichs wird dann eine Abtastfrequenz >2*$f_{sc}$ notwendig, beispielsweise eine Abtastfrequenz von 4*$f_{sc}$. Die Demodulation von Zusatzinformationen erfolgt dann in der in Fig. 4 dargestellten Weise durch Ausnutzung jedes zweiten Abtastwertes.

Für die Verarbeitung von Standardsignalen, d.h. Signalen ohne Zusatzinformationen, kann die Demodulation über einen Kennimpuls, der beispielsweise während der vertikalen Austastlücke zur Kennzeichnung von FBAS-Signalen mit/ohne Zusatzinformation gesendet wird, ausgeschaltet werden.

Für die Aufzeichnung von Zusatzinformationen, die erfindungsgemäß mit Hilfe des modifiziert eingesetzten Kammfilter-Schaltkreises demoduliert wurden, ist es zweckmäßig, den Gleichspannungspegel (DC-Wert) vor der Aufzeichnung auf einen mittleren Grauwert anzuheben. Dadurch wird der Aufzeichnungskanal in einem möglichst linearen Bereich betrieben. Diese Funktion kann ebenfalls von dem integrierten Schaltkreis übernommen werden.

Vor der Wiedergabe der Aufzeichnung kann der komplette Demodulationsvorgang durch entsprechende Modulation und erneuter Umsetzung der modulierten Zusatzinformationen in den Ultra-Schwarz-Bereich wieder rückgängig gemacht werden.

Der beschriebene Schaltkreis zur Demodulation von Zusatzinformationen und gleichzeitiger Luminanz-Chrominanz-Trennung kann als Vorsatz oder integraler Bestandteil von Einrichtungen zur zweikanaligen Aufzeichnung von Y und C, beispielsweise in S-VHS- oder Hi8-Recordern, eingesetzt werden.

**Patentansprüche**

1. Vorrichtung zur Bildsignal-Aufzeichnung und/oder -Wiedergabe, versehen mit einem vor einem Luminanzkomponenten-Eingang (Y) und Chrominanzkomponenten-Eingang (C) angeordneten integrierten Schaltkreis (20, 21), der an seinem Eingang (FBAS) anliegende FBAS-Signale mittels eines signaladaptiven Filters (24) und eines digitalen Chroma-Decoders (27) für den Farbträger in Luminanz- und Chrominanz-Komponenten auftrennen kann, wobei dieser Schaltkreis (20, 21) verwendet wird, um auf den Farbträger aufmodulierte Zusatzinformationen von am Eingang (FBAS) anliegenden FBAS-Signalen im Letterboxformat mit dem Chroma-Decoder (27) digital zu demodulieren und die demodulierten Zusatzinformationen während der Zeilen in den Streifen des Letterboxformats dem Luminanz-Komponenteneingang (Y) der Vorrichtung zuzuführen.

2. Vorrichtung nach Anspruch 1, **dadurch gekennzeichnet,** daß das am Eingang (FBAS) anliegende FBAS-Signal im integrierten Schaltkreis (20, 21) mit vierfacher Farbträgerfrequenz abgetastet wird.

3. Vorrichtung nach Anspruch 1 oder 2, **dadurch gekennzeichnet,** daß der Farbträger mit den Zusatzinformationen im Chroma-Decoder (27) mit zweifacher Farbträgerfrequenz abgetastet wird, wobei eine Farbträger-Schwingung generiert wird, deren Abtast-Phasenlage der senderseitigen Modulationsphase dieser Farbträger-Schwingung entspricht.

4. Vorrichtung nach einem oder mehreren der Ansprüche 1 bis 3, **dadurch gekennzeichnet,** daß Abtast-Phasen im Chroma-Decoder (27) vom Farbburst abgeleitet und mittels einer PLL-Steuerstufe bereitgestellt werden.

5. Vorrichtung nach einem oder mehreren der Ansprüche 1 bis 4, **dadurch gekennzeichnet,** daß der integrierte Schaltkreis (20, 21) ein Nyquist-Filter (41) mit einem beim Farbträger liegenden -6dB-Punkt enthält, mit dem die auf den Farbträger aufmodulierten Zusatzinformationen gefiltert werden.

6. Vorrichtung nach Anspruch 5, **dadurch gekennzeichnet,** daß die Luminanz-Signalanteile der FBAS-Signale in den nicht zu den Streifen des Letterboxformats gehörenden Zeilen vor der Abtastung im A/D-Umformer (21) mit dem Nyquist-Filter (41) gefiltert werden.

7. Vorrichtung nach einem oder mehreren der Ansprüche 1 bis 6, **dadurch gekennzeichnet,** daß der Chroma-Decoder (27) zusätzlich eine Amplitudenanhebung durchführt.

8. Vorrichtung nach einem oder mehreren der Ansprüche 1 bis 7, **dadurch gekennzeichnet,** daß im integrierten Schaltkreis (20, 21) die demodulierten Zusatzinformationen bei der Aufzeichnung in ihrem Gleichspannungspegel angehoben werden.

9. Vorrichtung nach einem oder mehreren der Ansprüche 1 bis 8, die einen S-VHS- oder Hi8-Videorecorder beinhaltet.

Fig. 1

Fig. 2

Fig. 3

EP 0 508 333 A1

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | FERNSEH- UND KINO-TECHNIK<br>Bd. 44, Nr. 12, 31. Dezember 1990,<br>Seiten 673 - 681;<br>R.SCHWEER ET AL.: 'ADAPTIVE LIMINANZ-CHROMINANZ-TRENNUNG MIT UNTERSCHIEDLICH FARBTRÄGERVERKOPPELTEN SAMPLINGPHASEN'<br>* das ganze Dokument *<br>--- | 1 | H04N7/00<br>H04N9/79<br>H04N9/83 |
| A | EP-A-0 372 555 (SONY CORPORATION) 13. Juni 1990<br>* Spalte 6, Zeile 26 - Spalte 11, Zeile 46 *<br>--- | 1 | |
| P,A | WO-A-9 116 793 (DEUTSCHE THOMSON-BRANDT GMBH) 31. Oktober 1991<br>* das ganze Dokument *<br>----- | 1 | |

| | RECHERCHIERTE SACHGEBIETE (Int. Cl.5 ) |
|---|---|
| | H04N |

Der vorliegende Recherchenbericht wurde für alle Patentansprüche erstellt

| Recherchenort | Abschlußdatum der Recherche | Prüfer |
|---|---|---|
| DEN HAAG | 17 JULI 1992 | BOSCH F.M.D. |